# EUROPEAN PATENT APPLICATION

(11) **EP 3 315 347 A1**
(43) Date of publication of application: **02.05.2018**
(21) Application number: 17196980.1
(22) Date of filing: 18.10.2017
(51) Int. Cl.: B60L 3/00

(54) **ELECTRIC VEHICLE, BATTERY STORAGE POWER SYSTEM, AND ALARM SYSTEM AND ALARM METHOD THEREOF**

(30) Priority: 19.10.2016 CN 201610913756
(71) Applicant: Optimum Battery Co., Ltd., Shenzhen City, Guangdong 518118 (CN)
(72) Inventor: HUANG, Wen hai, Shenzhen, Guangdong 518118 (CN); WU, Kuan, Shenzhen, Guangdong 518118 (CN)
(74) Representative: Hillis, Katherine Louise

(57) **Abstract**

The present invention provides an alarm system including a receiving module, a control module, a judgment module, a translation module, and an interaction module. The control module generates an alarm definition and an alarm comment code, according to an alarm message received from a battery management system, when the alarm message is the serious alarm message. The control module further outputs the alarm definition and the alarm comment code to the translation module, and the translation module translates the alarm comment code into text and images, when the judgment module receives the request signal from the interaction module. The interaction module displays the alarm message and the text and the images. The present invention further provides an alarm method, an electric vehicle, and a battery storage power system.

## Description

### BACKGROUND OF THE INVENTION

### Field of the Invention

This invention relates to electric vehicles, and more particular, to an alarm system and an alarm method applied in an electric vehicle and a battery storage power system.

### Description of the Related Art

Battery packs are used in a wide variety of electronic devices, such as electric vehicles and battery storage power systems. Generally, each electronic device uses a battery management system (BMS) to manage a battery pack thereof. When the battery pack is in an abnormal condition, the BMS will output a corresponding alarm message, to alert a user to deal with the abnormal condition of the battery pack timely. However, different types of BMSes will output different alarm messages for the same abnormal condition of the battery pack. If a BMS of an electronic device is replaced with another type BMS, the user will be confused by the alarm message, and cannot deal with the abnormal condition of the battery pack effectively.

It is desirable to provide an invention, which can overcome the problems and limitations mentioned above.

### SUMMARY OF THE INVENTION

The present invention is directed to an alarm system, an alarm method, an electric vehicle, and a battery storage power system that substantially obviates one or more of the problems due to limitations and disadvantages of the related art.

In an aspect of the present invention, there is provided an alarm system comprising: a receiving module configured to receive an alarm message from a battery management system (BMS); a control module; a judgment module electrically coupled to the receiving module through the control module, to receive the alarm message, and configured to judge whether the alarm message is a serious alarm message; a translation module electrically coupled to the control module; and an interaction module electrically coupled to the judgment module and the translation module. The control module is configured to generate an alarm definition and an alarm comment code, according to the alarm message, and output the alarm message to the interaction module, and the interaction module is configured to display the alarm message, on condition that the alarm message is the serious alarm message. The judgment module is further configured to judge whether receiving a request signal from the interaction module. The control module is further configured to output the alarm definition and the alarm comment code to the translation module, the translation module is configured to translate the alarm comment code into text and images, according to the alarm definition, and output the text and images to the interaction module, and the interaction module is further configured to display the text and the images, on condition that the judgment module receives the request signal from the interaction module.

In another aspect of the present invention, there is provided an alarm method comprising: receive an alarm message from a battery management system (BMS) by a receiving module; judging whether the alarm message is a serious alarm message by a judgment module; generating an alarm definition and an alarm comment code by a control module, according to the alarm message, on condition that the alarm message is the serious alarm message; displaying the alarm message by an interaction module; judging whether receiving a request signal from the interaction module by the judgment module; translating the alarm comment code into text and images by a translation module, according to the alarm definition, on condition that the judgment module receives the request signal from the interaction module; and displaying the text and the images by the interaction module.

In another aspect of the present invention, there is provided an electric vehicle comprising: a battery pack; a battery management system (BMS) configured to manage the battery pack, and output an alarm message, on condition that the battery pack is abnormal; an interactive interface; and an alarm system. The alarm system comprising: a receiving module configured to receive an alarm message from the BMS; a control module; a judgment module electrically coupled to the receiving module through the control module, to receive the alarm message, and configured to judge whether the alarm message is a serious alarm message; a translation module electrically coupled to the control module; and an interaction module electrically coupled to the judgment module, the translation module, and the interactive interface. The control module is configured to generate an alarm definition and an alarm comment code, according to the alarm message, and output the alarm message to the interaction module, and the interaction module is configured to control the interactive interface to display the alarm message, on condition that the alarm message is the serious alarm message. The judgment module is further configured to judge whether receiving a request signal from the interaction module. The control module is further configured to output the alarm definition and the alarm comment code to the translation module, the translation module is configured to translate the alarm comment code into text and images, according to the alarm definition, and output the text and images to the interaction module, and the interaction module is further configured to control the interactive interface to display the text and the images, on condition that the judgment module receives the request signal from the interaction module.

In another aspect of the present invention, there is provided a battery storage power system comprising: a battery pack; a battery management system (BMS) configured to manage the battery pack, and output an alarm message, on condition that the battery pack is abnormal; an interactive interface; and an alarm system. The alarm system comprising: a receiving module configured to receive an alarm message from the BMS; a control module; a judgment module electrically coupled to the receiving module through the control module, to receive the alarm message, and configured to judge whether the alarm message is a serious alarm message; a translation module electrically coupled to the control module; and an interaction module electrically coupled to the judgment module, the translation module, and the interactive interface. The control module is configured to generate an alarm definition and an alarm comment code, according to the alarm message, and output the alarm message to the interaction module, and the interaction module is configured to control the interactive interface to display the alarm message, on condition that the alarm message is the serious alarm message. The judgment module is further configured to judge whether receiving a request signal from the interaction module. The control module is further configured to output the alarm definition and the alarm comment code to the translation module, the translation module is configured to translate the alarm comment code into text and images, according to the alarm definition, and output the text and images to the interaction module, and the interaction module is further configured to control the interactive interface to display the text and the images, on condition that the judgment module receives the request signal from the interaction module.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 is a block schematic diagram of an electric vehicle provided by one embodiment of the present invention, wherein the electric vehicle comprises an alarm system.
FIG. 2 is a block schematic diagram of the alarm system of FIG. 1 provided by one embodiment of the present invention.
FIG. 3 is a flow chart of an alarm method provided by one embodiment of the present invention, wherein the alarm method comprises a block S2 and a block S8.
FIG. 4 a flow chart of the block S2 of Fig. 3 provided by an embodiment of the present invention.
FIG. 5 a flow chart of the block S8 of Fig. 3 provided by an embodiment of the present invention.
FIG. 6 is a block schematic diagram of a battery storage power system provided by one embodiment of the present invention.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "module", as used herein, refers to logic embodied in hardware or firmware, or to a collection of software instructions, written in a programming language, such as, Java, C, or assembly. One or more software instructions in the modules can be embedded in firmware, such as in an EPROM. The modules described herein can be implemented as either software and/or hardware modules and can be stored in any type of non-transitory computer-readable medium or other storage device. Some non-limiting examples of non-transitory computer-readable media include CDs, DVDs, BLU-RAY, flash memory, and hard disk drives. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

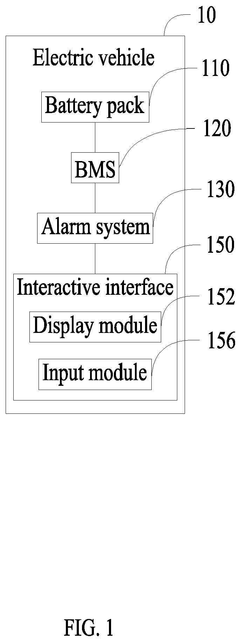

Fig. 1 illustrates a block schematic diagram of an electric vehicle 10 provided by one embodiment of the present invention. The electric vehicle 10 comprises a battery pack 110, a battery management system (BMS) 120, an alarm system 130, and an interactive interface 150. The alarm system 130 is electrically coupled to the battery pack 110 through the BMS 120, and electrically coupled to the interactive interface 150. The battery pack 110 comprises a plurality of rechargeable batteries (not shown) configured in a series, parallel or a mixture of both to store and deliver electric energy. The BMS 120 is configured to manage the battery pack 110, monitor states of the battery pack 110, and output an alarm message, on condition that the battery pack 110 is abnormal. The alarm system 130 is configured to identify the alarm message received from the BMS 120, and control the interactive interface 150 to display the alarm message and text and images explaining the alarm message in a way that a user can understand clearly and intuitively.

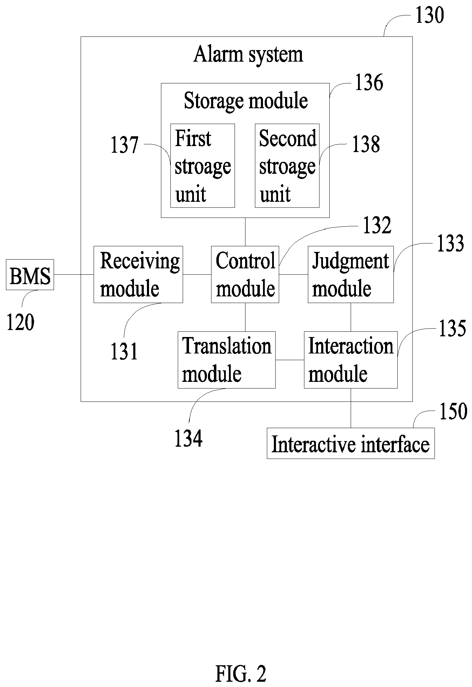

Fig. 2 illustrates a block schematic diagram of the alarm system 130 provided by one embodiment of the present invention. The alarm system 130 comprises a receiving module 131, a control module 132, a judgment module 133, a translation module 134, and an interaction module 135. The control module 132 is electrically coupled to the judgment module 133 and the translation module 134, and electrically coupled to the BMS 120 through the receiving module 131. The interaction module 135 is electrically coupled to the judgment module 133, the translation module 134, and the interactive interface 150.

The receiving module 131 is configured to receive the alarm message from the BMS 120. The judgment module 133 is configured receive the alarm message from the receiving module 131 through the control module 132, and judge whether the alarm message is a serious alarm message, and output the judged result to control module 132. The control module 132 is configured to generate an alarm definition and an alarm comment code, according to the alarm message, and output the alarm message to the interaction module 135, and the interaction module 135 is configured to control the interactive interface 150 to display the alarm message, on condition that the alarm message is the serious alarm message.

The judgment module 133 is further configured to judge whether receiving a request signal from the interaction module 135, and output the judged result to control module 132. The control module 132 is further configured to output the alarm definition and the alarm comment code to the translation module 134, the translation module 134 is configured to translate the alarm comment code into the text and the images, according to the alarm definition, and output the text and images to the interaction module 135, and the interaction module 135 is further configured to control the interactive interface 150 to display the text and the images, on condition that the judgment module 133 receives the request signal from the interaction module 135.

In one embodiment, the interactive interface 150 comprises a display module 152 and an input module 156 (as shown in Fig.1). The display module 152 is configured to display the alarm message and the text and the images. The input module 156 is configured to input the request signal. It can understood that, the interactive interface 150 may be a touch screen; the request signal may be triggered by a user, when the user want to know more details of the alarm message. In other embodiments, the interaction module 135 is further configured to output the request signal to the judgment module 133 periodically, and the input module 156 can be omitted.

The judgment module 133 is further configured to define N levels for the alarm message, define the first level to the Mth level as serious levels, and define the first level as the highest severity, and severity decreases with increasing levels, wherein M and N are positive integers, and 1<M<N. The judgment module 133 is further configured to judge the alarm message is the serious alarm message, on condition that a level of the alarm message is in the serious levels.

In one embodiment, N=3, and M=2. A format of the first level is 0x01+alarm code (7bytes), a format of the second level is 0x02+alarm code (7bytes), and a format of the third level is 0x03+alarm code (7bytes). In other embodiments, values of the M and the N, and a format of each level, can be adjusted according to actual need.

The alarm definition comprises a protocol version, a program identifier, and a number of alarms. The protocol version is configured to indicate a version of a protocol of the alarm message. The program identifier is configured to identify a type of the BMS 120. The number of alarms is configured to indicate a number of alarms comprised in the alarm message. In one embodiment, the alarm definition is defined as a frame, the protocol version is occupied one byte of the frame, the program identifier is occupied four bytes of the frame, and the number of alarms is occupied one byte of the frame.

In one embodiment, the alarm system 130 further comprise a storage module 136 electrically coupled to the control module 132. The storage module 136 comprises a first storage unit 137 and a second storage unit 138. The first storage unit 137 is configured to store the alarm message. The second storage unit 138 is configured to store the alarm definition, the alarm comment code, and the text and the images. In one embodiment, the first storage unit 137 comprises an electrically erasable programmable read-only memory, and the second storage unit 138 comprises a flash memory.

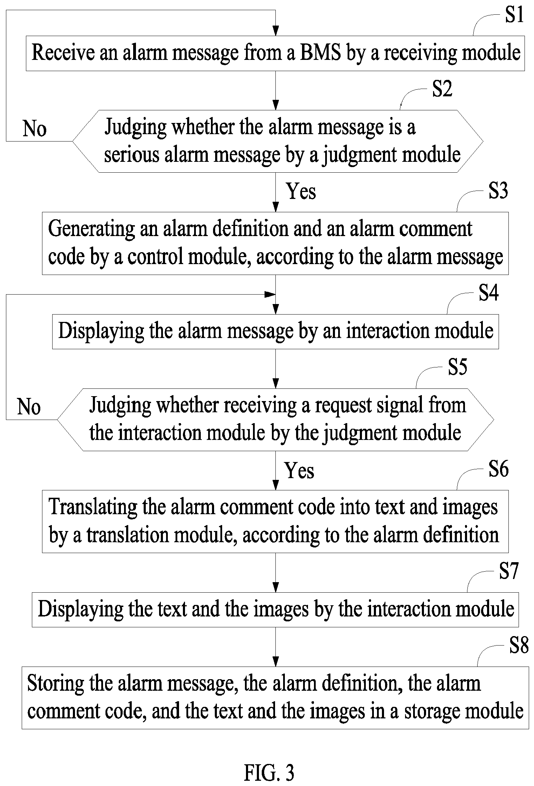

Fig. 3 illustrates a flow chart of alarm method provided by an embodiment of the present invention. Each block shown in FIG. 3 represents one or more processes, methods, or subroutines, carried out in the alarm method. Depending on the embodiment, additional blocks can be added, others removed, and the illustrated order of blocks is by example only and the order of the blocks can change. The alarm method can begin at block S1.

At block S1, receive an alarm message from a battery management system (BMS) 120 by a receiving module 131.

In one embodiment, the BMS 120 is configured to manage a battery pack 110, monitor states of the battery pack 110, and output an alarm message, on condition that the battery pack 110 is abnormal. The receiving module 131 is electrically coupled to the BMS 120, to receive the alarm message from the BMS 120.

At block S2, judging whether the alarm message is a serious alarm message by a judgment module 133. If the alarm message is not the serious alarm message, the block S1 is performed. If the alarm message is the serious alarm message, the block S3 is performed.

At block S3, generating an alarm definition and an alarm comment code by a control module 132, according to the alarm message.

The alarm definition comprises a protocol version, a program identifier, and a number of alarms. The protocol version is configured to indicate a version of a protocol of the alarm message. The program identifier is configured to identify a type of the BMS 120. The number of alarms is configured to indicate a number of alarms comprised in the alarm message. In one embodiment, the alarm definition is defined as a frame, the protocol version is occupied one byte of the frame, the program identifier is occupied four bytes of the frame, and the number of alarms is occupied one byte of the frame.

At block S4, displaying the alarm message by an interaction module 135.

At block S5, judging whether receiving a request signal from the interaction module 135 by the judgment module 133. If the judgment module 133 does not receives the request signal from the interaction module 135, the block S4 is performed. If the judgment module 133 receives the request signal from the interaction module 135, the block S6 is performed.

At block S6, translating the alarm comment code into text and images by a translation module 134, according to the alarm definition.

At block S7, displaying the text and the images by the interaction module 135.

At block S8, storing the alarm message, the alarm definition, the alarm comment code, and the text and the images in a storage module 136.

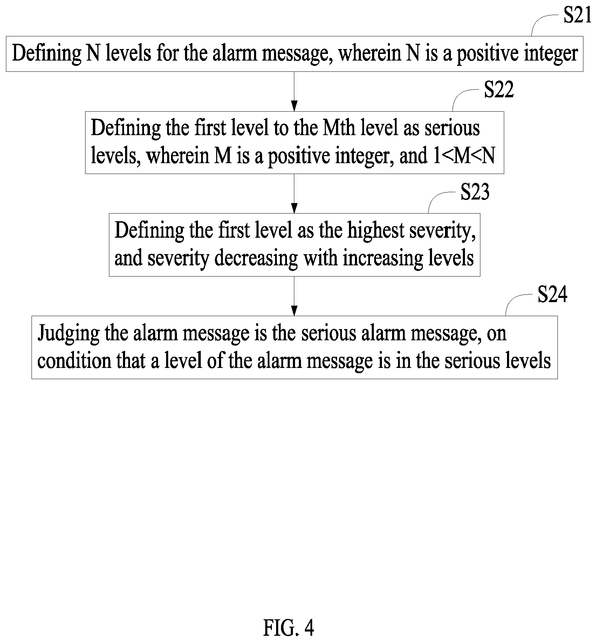

Fig. 4 illustrates a flow chart of the block S2 provided by an embodiment of the present invention. Each block shown in FIG. 4 represents one or more processes, methods, or subroutines, carried out in "judging whether the alarm message is a serious alarm message by a judgment module 133". Depending on the embodiment, additional blocks can be added, others removed, and the illustrated order of blocks is by example only and the order of the blocks can change. Judging whether the alarm message is a serious alarm message by a judgment module 133 can begin at block S21.

At block S21, defining N levels for the alarm message, wherein N is a positive integer.

At block S22, defining the first level to the Mth level as serious levels, wherein M is a positive integer, and 1<M<N.

At block S23, defining the first level as the highest severity, and severity decreasing with increasing levels.

At block S24, judging the alarm message is the serious alarm message, on condition that a level of the alarm message is in the serious levels.

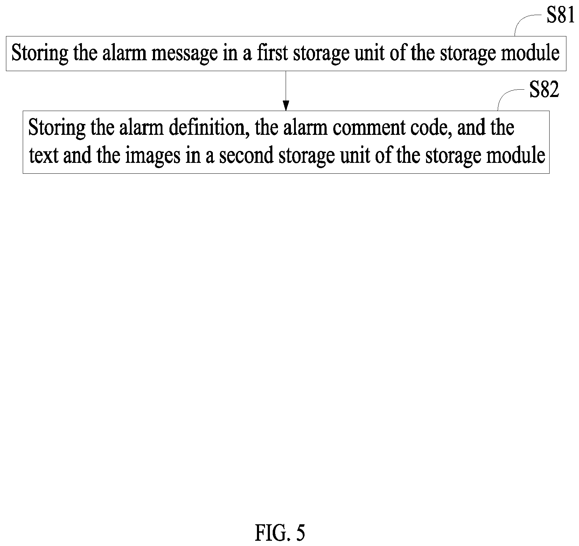

Fig. 5 illustrates a flow chart of the block S8 provided by an embodiment of the present invention. Each block shown in FIG. 5 represents one or more processes, methods, or subroutines, carried out in "storing the alarm message, the alarm definition, the alarm comment code, and the text and the images in a storage module 136". Depending on the embodiment, additional blocks can be added, others removed, and the illustrated order of blocks is by example only and the order of the blocks can change. Storing the alarm message, the alarm definition, the alarm comment code, and the text and the images in a storage module 136 can begin at block S81.

At block S81, storing the alarm message in a first storage unit 137 of the storage module 136.

At block S82, storing the alarm definition, the alarm comment code, and the text and the images in a second storage unit 138 of the storage module 136.

In one embodiment, the first storage unit 137 comprises an electrically erasable programmable read-only memory, and the second storage unit 138 comprises a flash memory.

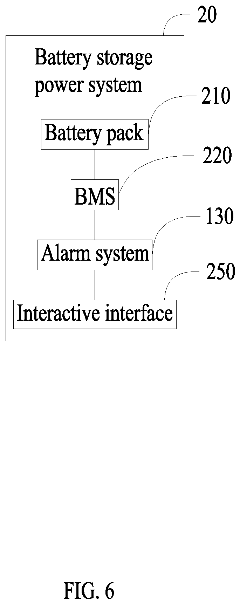

Fig. 6 illustrates a block schematic diagram of a battery storage power system 20 provided by one embodiment of the present invention. The battery storage power system 20 a battery pack 210, a battery management system (BMS) 220, an alarm system 130, and an interactive interface 250. The alarm system 130 is electrically coupled to the battery pack 210 through the BMS 220, and electrically coupled to the interactive interface 250. The battery pack 210 comprises a plurality of rechargeable batteries (not shown) configured in a series, parallel or a mixture of both to store and deliver electric energy. The BMS 220 is configured to manage the battery pack 210, monitor states of the battery pack 210, and output an alarm message, on condition that the battery pack 210 is abnormal. The alarm system 130 is configured to identify the alarm message received from the BMS 220, and control the interactive interface 250 to display the alarm message and text and images explaining the alarm message in a manner that a user can understand clearly and intuitively.

Therefore, the alarm system 130 can be applied in the battery storage power system 20, and the alarm method can be applied in the battery storage power system 20 also. Furthermore, the alarm system 130 and the alarm method can be applied in other devices and systems comprising a BMS, the BMS is configured to manage a battery pack, and output an alarm message, on condition that the battery pack is abnormal.

As detail above, the control module 132 is configured to generate an alarm definition and an alarm comment code, according to the alarm message, when the alarm message is the serious alarm message; the translation module 134 is configured to translate the alarm comment code into text and images, according to the alarm definition, when the judgment module 133 receives the request signal from the interaction module 135; and the interaction module 135 is configured to control the interactive interface 150/250 to display the alarm message and the text and the images. Therefore, the alarm system 130 can be compatible with any type of BMS 120, can identify the alarm message received from the BMS 120/220 accurately, and can controls the interactive interface 150/250 to display the alarm message clearly and intuitively.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. An alarm system (130), comprising:
a receiving module (131) configured to receive an alarm message from a battery management system (BMS) (120);
a control module (132);
a judgment module (133) electrically coupled to the receiving module (131) through the control module (132), to receive the alarm message, and configured to judge whether the alarm message is a serious alarm message;
a translation module (134) electrically coupled to the control module (132); and
an interaction module (135) electrically coupled to the judgment module (133) and the translation module (134);
wherein the control module (132) is configured to generate an alarm definition and an alarm comment code, according to the alarm message, and output the alarm message to the interaction module (135), and the interaction module (135) is configured to display the alarm message, on condition that the alarm message is the serious alarm message;
wherein the judgment module (133) is further configured to judge whether receiving a request signal from the interaction module (135); and
wherein the control module (132) is further configured to output the alarm definition and the alarm comment code to the translation module (134), the translation module (134) is configured to translate the alarm comment code into text and images, according to the alarm definition, and output the text and images to the interaction module (135), and the interaction module (135) is further configured to display the text and the images, on condition that the judgment module (133) receives the request signal from the interaction module (135).

2. The alarm system (130) of claim 1, wherein the judgment module (133) is further configured to define N levels for the alarm message, define the first level to the Mth level as serious levels, and define the first level as the highest severity, and severity decreases with increasing levels; the judgment module (133) is further configured to judge the alarm message is the serious alarm message, on condition that a level of the alarm message is in the serious levels; M and N are positive integers, and 1<M<N.

3. The alarm system (130) of claim 1, wherein the alarm definition comprises:
a protocol version configured to indicate a version of a protocol of the alarm message;
a program identifier configured to identify a type of the BMS (120); and
a number of alarms configured to indicate a number of alarms comprised in the alarm message.

4. The alarm system (130) of claim 3, wherein the alarm definition is defined as a frame, the protocol version is occupied one byte of the frame, the program identifier is occupied four bytes of the frame, and the number of alarms is occupied one byte of the frame.

5. The alarm system (130) of claim 1, wherein the alarm system (130) further comprise a storage module (136) electrically coupled to the control module (132), the storage module (136) comprising:
a first storage unit (137) configured to store the alarm message; and
a second storage unit (138) configured to store the alarm definition, the alarm comment code, and the text and the images.

6. The alarm system (130) of claim 5, wherein the first storage unit (137) comprises an electrically erasable programmable read-only memory, and the second storage unit (138) comprises a flash memory.

7. An alarm method, comprising:
receive an alarm message from a battery management system (BMS) (120) by a receiving module (131);
judging whether the alarm message is a serious alarm message by a judgment module (133);
generating an alarm definition and an alarm comment code by a control module (132), according to the alarm message, on condition that the alarm message is the serious alarm message;
displaying the alarm message by an interaction module (135);
judging whether receiving a request signal from the interaction module (135) by the judgment module (133);
translating the alarm comment code into text and images by a translation module (134), according to the alarm definition, on condition that the judgment module (133) receives the request signal from the interaction module (135); and
displaying the text and the images by the interaction module (135).

8. The alarm method of claim 7, wherein "judging whether the alarm message is a serious alarm message by a judgment module (133)" comprises:
defining N levels for the alarm message, wherein N is a positive integer;
defining the first level to the Mth level as serious levels, wherein M is a positive integer, and 1<M<N;
defining the first level as the highest severity, and severity decreasing with increasing levels; and
judging the alarm message is the serious alarm message, on condition that a level of the alarm message is in the serious levels.

9. The alarm method of claim 7, wherein the alarm definition comprises:
a protocol version configured to indicate a version of a protocol of the alarm message;
a program identifier configured to identify a type of the BMS (120); and
a number of alarms configured to indicate a number of alarms comprised in the alarm message.

10. The alarm method of claim 9, wherein the alarm definition is defined as a frame, the protocol version is occupied one byte of the frame, the program identifier is occupied four bytes of the frame, and the number of alarms is occupied one byte of the frame.

11. The alarm method of claim 7, wherein the alarm method further comprises:
storing the alarm message, the alarm definition, the alarm comment code, and the text and the images in a storage module (136).

12. The alarm method of claim 11, wherein "storing the alarm message, the alarm definition, the alarm comment code, and the text and the images in a storage module (136)" comprises:
storing the alarm message in a first storage unit (137) of the storage module (136); and
storing the alarm definition, the alarm comment code, and the text and the images in a second storage unit (138) of the storage module (136).

13. An electric vehicle (10), comprising:
a battery pack (110);
a battery management system (BMS) (120) configured to manage the battery pack (110), and output an alarm message, on condition that the battery pack (110) is abnormal;
an interactive interface (150); and
an alarm system (130) comprising:
a receiving module (131) configured to receive the alarm message from the BMS (120);
a control module (132);
a judgment module (133) electrically coupled to the receiving module (131) through the control module (132), to receive the alarm message, and configured to judge whether the alarm message is a serious alarm message;
a translation module (134) electrically coupled to the control module (132); and
an interaction module (135) electrically coupled to the judgment module (133), the translation module (134), and the interactive interface (150);
wherein the control module (132) is configured to generate an alarm definition and an alarm comment code, according to the alarm message, and output the alarm message to the interaction module (135), and the interaction module (135) is configured to control the interactive interface (150) to display the alarm message, on condition that the alarm message is the serious alarm message;
wherein the judgment module (133) is further configured to judge whether receiving a request signal from the interaction module (135); and
wherein the control module (132) is further configured to output the alarm definition and the alarm comment code to the translation module (134), the translation module (134) is configured to translate the alarm comment code into text and images, according to the alarm definition, and output the text and images to the interaction module (135), and the interaction module (135) is further configured to control the interactive interface (150) to display the text and the images, on condition that the judgment module (133) receives the request signal from the interaction module (135).

14. The electric vehicle (10) of claim 13, wherein the judgment module (133) is further configured to define N levels for the alarm message, define the first level to the Mth level as serious levels, and define the first level as the highest severity, and severity decreases with increasing levels; the judgment module (133) is further configured to judge the alarm message is the serious alarm message, on condition that a level of the alarm message is in the serious levels; M and N are positive integers, and 1<M<N.

15. The electric vehicle (10) of claim 13, wherein the alarm definition comprises:
a protocol version configured to indicate a version of a protocol of the alarm message;
a program identifier configured to identify a type of the BMS (120); and
a number of alarms configured to indicate a number of alarms comprised in the alarm message.

16. The electric vehicle (10) of claim 15, wherein the alarm definition is defined as a frame, the protocol version is occupied one byte of the frame, the program identifier is occupied four bytes of the frame, and the number of alarms is occupied one byte of the frame.

17. The electric vehicle (10) of claim 13, wherein the alarm system (130) further comprise a storage module (136) electrically coupled to the control module (132), the storage module (136) comprising:
a first storage unit (137) configured to store the alarm message; and
a second storage unit (138) configured to store the alarm definition, the alarm comment code, and the text and the images.

18. The electric vehicle (10) of claim 16, wherein the first storage unit (137) comprises an electrically erasable programmable read-only memory, and the second storage unit (138) comprises a flash memory.

19. The electric vehicle (10) of claim 13, wherein the interactive interface (150) comprises:
a display module (152) configured to display the alarm message and the text and the images; and
an input module (156) configured to input the request signal;
wherein the request signal is transmitted to the judgment module (133) through the interaction module (135).

20. A battery storage power system (20), comprising:
a battery pack (210);
a battery management system (BMS) (220) configured to manage the battery pack (210), and output an alarm message, on condition that the battery pack (210) is abnormal;
an interactive interface (250); and
an alarm system (130) comprising:
a receiving module (131) configured to receive the alarm message from the BMS (220);
a control module (132);
a judgment module (133) electrically coupled to the receiving module (131) through the control module (132), to receive the alarm message, and configured to judge whether the alarm message is a serious alarm message;
a translation module (134) electrically coupled to the control module (132); and
an interaction module (135) electrically coupled to the judgment module (133), the translation module (134), and the interactive interface (250);
wherein the control module (132) is configured to generate an alarm definition and an alarm comment code, according to the alarm message, and output the alarm message to the interaction module (135), and the interaction module (135) is configured to control the interactive interface (250) to display the alarm message, on condition that the alarm message is the serious alarm message;
wherein the judgment module (133) is further configured to judge whether receiving a request signal from the interaction module (135); and
wherein the control module (132) is further configured to output the alarm definition and the alarm comment code to the translation module (134), the translation module (134) is configured to translate the alarm comment code into text and images, according to the alarm definition, and output the text and images to the interaction module (135), and the interaction module (135) is further configured to control the interactive interface (250) to display the text and the images, on condition that the judgment module (133) receives the request signal from the interaction module (135).
